# EUROPÄISCHE PATENTSCHRIFT

(11) **EP 2 274 817 B1**
(45) Veröffentlichungstag und Bekanntmachung des Hinweises auf die Patenterteilung: **06.03.2013**
(21) Anmeldenummer: 09741934.5
(22) Anmeldetag: 10.03.2009
(51) Int. Cl.: H02K 5/08

(54) **GEHÄUSE FÜR EINE ANTRIEBSVORRICHTUNG UND ANTRIEBSVORRICHTUNG**
HOUSING FOR A DRIVE DEVICE AND DRIVE DEVICE
LOGEMENT POUR DISPOSITIF D'ENTRAINEMENT ET DISPOSITIF D'ENTRAÎNEMENT

(30) Priorität: 06.05.2008 DE 102008001591
(43) Veröffentlichungstag der Anmeldung: 19.01.2011
(73) Patentinhaber: Robert Bosch GmbH, 70442 Stuttgart (DE)
(72) Erfinder: HURST, Richard, 77652 Offenburg (DE); KASTINGER, Guenter, 76571 Gaggenau-Sulzbach (DE); HOLZER, Thomas, 74889 Sinsheim-Waldangelloch (DE); DUDEK, Alexander, 77656 Offenburg (DE)
(86) Internationale Anmeldenummer: PCT/EP2009/052776
(87) Internationale Veröffentlichungsnummer: WO 2009/135716

(56) Entgegenhaltungen:
- EP-A- 1 266 741
- EP-A- 1 313 359
- EP-A- 1 884 695
- EP-A- 1 921 020
- WO-A-88/09422
- DE-A1- 10 307 861
- DE-A1-102007 012 703
- DE-A1-102007 022 192
- DE-U1- 9 000 324
- DE-U1-202006 008 917

## Beschreibung

### Stand der Technik

Die Erfindung betrifft ein Gehäuse für eine Antriebsvorrichtung, insbesondere für einen Verstellantrieb in einem Kraftfahrzeug gemäß dem Oberbegriff des Anspruchs 1, eine Antriebsvorrichtung, insbesondere einen Verstellantrieb und/oder ein Scheibenwischerantrieb in einem Kraftfahrzeug, vorzugsweise einen Fensterverstellantrieb, gemäß Anspruch 10 sowie ein Verfahren zum Überprüfen der Dichtheit einer Druckausgleichsmembran gemäß dem Oberbegriff des Anspruchs 11.

Druckausgleichsmembrane haben die Aufgabe einen Druckausgleich zwischen einem Gehäuseinnenvolumen und der Umgebung zu ermöglichen, um somit kritische Über- und/oder Unterdrücke aufgrund von Temperaturschwankungen zu vermeiden. Darüber hinaus haben Druckausgleichsmembrane die Funktion, einen Flüssigkeitseintritt in das Gehäuseinnere zu vermeiden. Druckausgleichsmembrane werden an Gehäusen für Antriebsvorrichtungen, insbesondere im Kraftfahrzeugbereich, eingesetzt, wobei die Druckausgleichsmembrane entweder unmittelbar an einem von einer Gehäusewand gebildeten Träger oder an einem am Gehäuse festgelegten Träger durch Verschweißen festgelegt sein kann. Bei bekannten Gehäusen ist die, die Druckausgleichsmembran umgebende Gehäusegeometrie, von Unebenheiten und Zerklüftungen geprägt, so dass eine Überprüfung der Funktionsfähigkeit der Druckausgleichsmembran vor deren Montage am Gehäuse durchgeführt werden muss. Nachteilig hierbei ist, dass die Dichtheit der Verbindung zwischen Druckausgleichsmembran und Gehäuse oder zwischen einem die Druckausgleichsmembran tragenden Träger und dem Gehäuse nicht geprüft werden kann.

EP 1 313 359 offenbart ein Gehäuse mit eimen Druckausgleichsmembran.

### Offenbarung der Erfindung

### Technische Aufgabe

Der Erfindung liegt daher die Aufgabe zugrunde, ein Gehäuse mit einer Druckausgleichsmembran vorzuschlagen, das eine Dichtheitsprüfung der Druckausgleichsmembran am Gehäuse erlaubt. Ferner besteht die Aufgabe darin, eine entsprechend optimierte Antriebsvorrichtung sowie ein entsprechend optimiertes Verfahren zum Überprüfen der Dichtheit einer Druckausgleichsmembran vorzuschlagen.

### Technische Lösung

Diese Aufgabe wird hinsichtlich des Gehäuses mit den Merkmalen des Anspruchs 1 und hinsichtlich der Antriebsvorrichtung mit den Merkmalen des Anspruchs 10 gelöst. Vorteilhafte Weiterbildungen der Erfindung sind in den Unteransprüchen angegeben.

Der Erfindung liegt der Gedanke zugrunde, am Gehäuse eine um die Druckausgleichsmembran umlaufende Dichtfläche mit einem stetigen, d.h. keine Sprünge aufweisenden, Verlauf in Umfangsrichtung vorzusehen. Bevorzugt ist die Druckausgleichsmembran selbst wiederum von im Stand der Technik bis unmittelbar an die Druckausgleichsmembran reichenden Unebenheiten und Zerklüftungen umgeben, wobei sich die Druckausgleichsmembran gegenüber diesen Unebenheiten und Zerklüftungen durch ihren umlaufenden, stetigen Verlauf abzeichnet. Durch das Vorsehen einer entweder unmittelbar am Gehäuse oder an einem am Gehäuse montierten Träger festgelegte, insbesondere verschweißte, um die Druckausgleichsmembran umlaufende, sich stetig in Umfangsrichtung verlaufende Dichtfläche wird erstmals die Möglichkeit geschaffen, die Funktionsfähigkeit der Druckausgleichsmembran sowie Dichtheit der Verbindung aus Druckausgleichsmembran und Gehäuse bzw. aus Träger und Gehäuse unmittelbar am Gehäuse zu überprüfen, indem an die umlaufende Dichtfläche eine geeignete Prüfvorrichtung dichtend angelegt und die Druckausgleichsmembran von außen mit Druckluft oder einer Flüssigkeit wie z.B. Wasser beaufschlagt wird. Dabei kann anhand des zu messenden Volumenstroms bzw. des beaufschlagten Drucks die Funktionsfähigkeit bzw. die Schadhaftigkeit der Druckausgleichsmembran sowie der Schweißnaht, geprüft werden. Anhand des gemessenen Volumenstroms oder des aufgebauten Druckes kann, insbesondere bestimmt werden, ob die Druckausgleichsmembran undurchlässig für Flüssigkeit, insbesondere für Wasser, ist. Eine Prüfung der Druckausgleichsmembran auf Dichtheit vor deren Montage kann bei einem nach dem Konzept der Erfindung ausgebildeten Gehäuse mit umlaufender Dichtfläche mit Vorteil verzichtet werden.

Von besonderem Vorteil ist eine Ausführungsform, bei der die Dichtfläche in Umfangsrichtung keine Steigungen und Gefälle aufweist, sondern in einer Dichtebene angeordnet ist. Hierdurch wird die Dichtheitsprüfung bzw. die Anlage der Prüfvorrichtung an die Dichtfläche erleichtert, da es nicht auf eine exakte Zentrierung der Prüfvorrichtung zu der Dichtfläche ankommt.

Von besonderem Vorteil ist eine Ausführungsform des Gehäuses, bei der die Dichtfläche von einer vom Gehäuseinneren abgewandten Stirnseite an einer Umfangswand gebildet ist, die die Druckausgleichsmembran, vorzugsweise mit Abstand umläuft. Bevorzugt ist diese Umfangswand, zumindest abschnittsweise, gegenüber der umliegenden Gehäuseoberflächengeometrie abgesetzt, insbesondere erhöht gegenüber dieser ausgebildet. Die Radialerstreckung der Dichtfläche und/oder Umfangswand ist bevorzugt aus einem Bereich zwischen etwa 2mm und 10mm gewählt. Bevorzugt beträgt die Radialerstreckung etwa 5mm.

Um einen Flüssigkeitsstau in einem Bereich radial innerhalb der Dichtfläche zu vermeiden, der dazu führen könnte, dass die "Atmungsfunktion" der Druckausgleichsmembran beeinträchtigt wird, ist in Weiterbildung der Erfindung mit Vorteil vorgesehen, dass die seitlich der Druckausgleichsmembran angeordnete Dichtfläche abgesetzt, d.h. unterhalb des radial äußeren Randbereichs der Druckausgleichsmembran angeordnet ist. Bevorzugt ist die insbesondere kreisförmig, oval, langgestreckt oder rechteckig konturierte Druckausgleichsmembran dabei nicht planeben angeordnet, sondern ballig, um ein optimiertes Ablaufen von Flüssigkeit von der Membran zu bewirken.

In Weiterbildung der Erfindung ist mit Vorteil vorgesehen, dass zum Schutz der Druckausgleichsmembran oberhalb derselben ein Schutzdeckel angeordnet ist, wobei sich die seitlich des Schutzdeckels angeordnete Dichtfläche vorzugsweise in einem Bereich in Hochrichtung betrachtet unterhalb des Schutzdeckels angeordnet ist, um hierdurch einen die Funktionsfähigkeit der Druckausgleichsmembran beeinträchtigenden Flüssigkeitsstau in einem Bereich innerhalb der Dichtfläche im Betrieb des Gehäuses zu verhindern.

Um bei minimalem Materialeinsatz ein äußert stabiles Gehäuse zu erhalten, ist in Weiterbildung der Erfindung mit Vorteil vorgesehen, dass das Gehäuse an seiner Außenseite mindestens eine Verstärkungsrippe aufweist. Im Stand der Technik ist die Druckausgleichsmembran dabei häufig von Verstärkungsrippen umgeben, die derart ausgebildet sind, dass sie eine Art Wanne begrenzen, innerhalb derer die Druckausgleichsmembran angeordnet ist, und zwar unterhalb der Oberkante der Verstärkungsrippen, was dazu führt, dass sich Flüssigkeit in der von den Verstärkungsrippen gebildeten Wanne sammeln und die Funktion der Druckausgleichsmembran durch Fluten derselben beeinträchtigen kann. Insbesondere bei einem vollständigen Fluten der Druckausgleichsmembran ist keine Atmungsfunktion, also keine Luftaustauschfunktion mehr gegeben. Als Weiterbildung sowie als eigenständige Erfindung ist nun vorgesehen, die zumindest eine Verstärkungsrippe derart zu modifizieren bzw. auszuformen, dass mindestens ein Wasserablauf gebildet ist, der ein kritisches Anstauen von Flüssigkeit in einem Bereich zwischen der Verstärkungsrippe und der Druckausgleichsmembran sicher verhindert. Bevorzugt weißt die mindestens eine Verstärkungsrippe hierbei eine seitlich und unterhalb der Druckausgleichsmembran liegende Vertiefung auf, die durch die Verstärkungsrippe gebildete Barriere aufgebrochen ist.

Von besonderem Vorteil ist eine Ausführungsform, bei der die mindestes eine Verstärkungsrippe, vorzugsweise mindestens zwei Verstärkungsrippen, jeweils eine über ihre Längserstreckung variierende Höhenerstreckung aufweist/aufweisen und/oder mit einem Durchbruch versehen sind. Dabei sollte mindestens eine tiefste Stelle vorgesehen werden, die auf Höhe des Randbereichs der Druckausgleichsmembran oder bevorzugt darunter angeordnet ist.

Eine Möglichkeit zur Realisierung einer variierenden Höhenerstreckung besteht darin, dass mindestens eine Verstärkungsrippe, zumindest in einem Abschnitt, in Richtung ihrer Längserstreckung betrachtet eine Keilform aufweist. Besonders bevorzugt ist eine Ausführungsform, bei der die Verstärkungsrippe zwei einander zugewandte Keilabschnitte umfasst.

Die Erfindung führt auch auf eine Antriebsvorrichtung, insbesondere ein Kraftfahrzeug. Besonders bevorzugt handelt es sich um einen Scheibenwischerantrieb mit einem in dem Gehäuse angeordneten Getriebe. Die Antriebsvorrichtung zeichnet sich durch ein zuvor beschriebenes Gehäuse mit einer umlaufenden, einen stetigen Verlauf aufweisenden, Dichtfläche und/oder mit mindestens einer, einen Flüssigkeitsablauf ermöglichenden Verstärkungsrippe aus.

Darüber hinaus führt die Erfindung auf ein Verfahren zum Überprüfen der Funktionsfähigkeit (Luftdurchlässigkeit und/oder Flüssigkeitsdichtheit) einer Druckausgleichsmembran unter Zuhilfenahme einer Prüfvorrichtung. Erfindungsgemäß ist vorgesehen, dass die Funktionsfähigkeitsprüfung bei der an dem Gehäuse angeordneten Druckausgleichsmembran erfolgt, wobei zur Funktionsfähigkeitsprüfung die Prüfvorrichtung, insbesondere mit einen elastischen Dichtbereich zur dichten Anlage an die um die Druckausgleichsmembran umlaufende Dichtfläche gebracht wird. Die Funktionsfähigkeitsprüfung erfolgt bevorzugt durch Beaufschlagen der Druckausgleichsmembran mit einem Gas, insbesondere mit Druckluft. Durch die Funktionsfähigkeitsprüfung bei der an dem Gehäuse montierten Druckausgleichsmembran kann nicht nur die Dichtheit der gasdurchlässigen Druckausgleichsmembran als solches auf Flüssigkeit, sondern auch die Flüssigkeits-Dichtigkeit der Verbindung zwischen Druckausgleichsmembran und Gehäuse bzw. zwischen Träger und Gehäuse und/oder zwischen Druckausgleichsmembran und Träger sowie der Schweißnaht überprüft werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
Fig. 1: einen Gehäusedeckel eines Gehäuses einer Antriebsvorrichtung mit einer Druckausgleichsmembran, um die eine ebene Dichtfläche umläuft,
Fig. 2: ein vergrößerter Ausschnitt aus Fig. 1, wobei auf die Darstellung der Druckausgleichsmembran aus Übersichtlichkeitsgründen verzichtet wurde,
Fig. 3: ein Detailausschnitt einer Gehäuseoberfläche mit einer Druckausgleichsmembran, die von einem Schutzdeckel geschützt ist,
Fig. 4: eine Darstellung eines möglichen Verstärkungsrippenverlaufs,
Fig. 5: ein alternativer Verstärkungsrippenverlauf.

### Ausführungsformen der Erfindung

In den Figuren sind gleiche Bauteile und Bauteile mit der gleichen Funktion mit den gleichen Bezugszeichen gekennzeichnet.

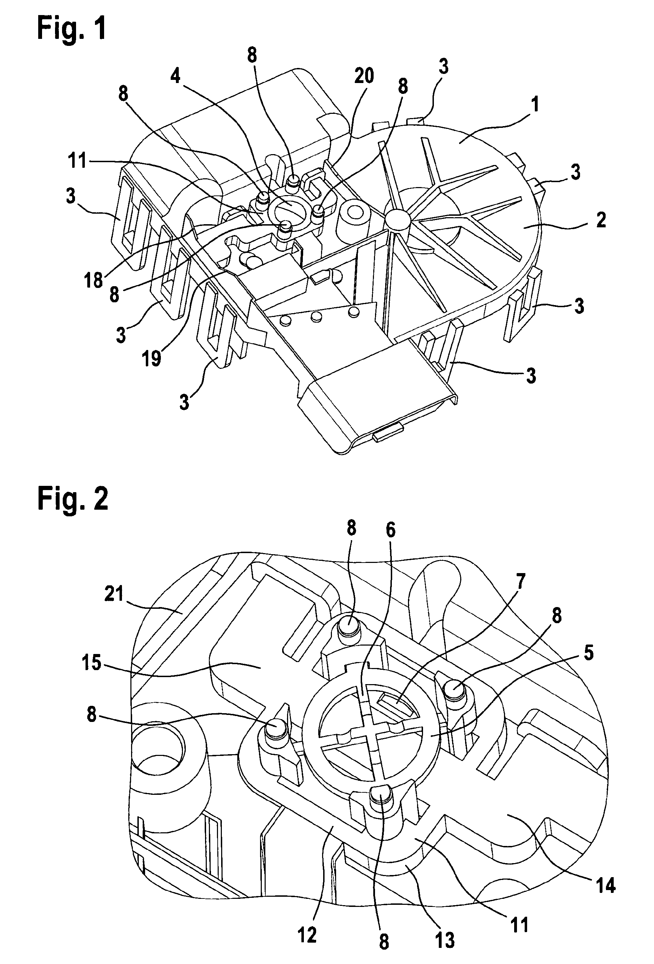

In Fig. 1 ist ein Gehäusedeckel 1 eines Gehäuses 2 für eine Antriebsvorrichtung in einem Kraftfahrzeug gezeigt. Der Gehäusedeckel 1 ist mit Hilfe von seitlichen Rastlaschen 3 an einem nicht gezeigten Gehäusegrundkörper festlegbar. In dem aus Polybuthylenterephthalat (PBT) gebildeten Gehäuse ist ein nicht gezeigtes Getriebe aufgenommen, das von einem nicht gezeigten elektrischen Antriebsmotor antreibbar ist. An dem Gehäusedeckel 1 des Gehäuses 2 ist eine in dem gezeigten Ausführungsbeispiel kreisrund konturierte Druckausgleichsmembran 4 aus gewebtem Polytetrafluorethylen (PTFE) festgeschweißt. Hierzu ist, wie aus Fig. 2 zu erkennen ist, ein Auflagering 5 vorgesehen, auf dem die Druckausgleichsmembran aufgelegt und mit ihrem Umfangsrand verschweißt werden kann. Ausgehend von dem Auflagering 5 erstrecken sich radial nach innen kreuzförmig angeordnete Stege 6, die die Druckausgleichsmembran 4 radial innerhalb des Auflagerings 5 stützen. Die Druckausgleichsmembran 4 verschließt im montierten Zustand eine Gehäuseöffnung 7, durch die ein Luftaustausch des Gehäuseinneren mit der Umgebung möglich ist, um somit für die Stabilität des Gehäuses 2 kritische, durch Temperaturschwankungen verursachte, Über- und/oder Unterdrücke vermieden werden können. Die Druckausgleichsmembran 4 ist hierzu luftdurchlässig und wasserabweisend ausgebildet.

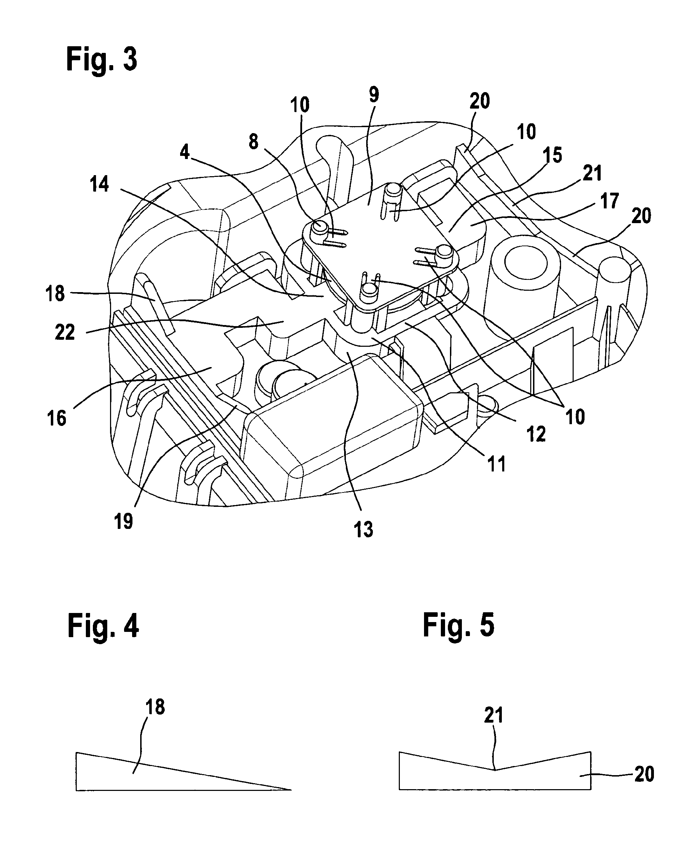

Wie sich weiterhin aus Fig. 2 ergibt, befinden sich radial außerhalb des Auflagerings 5 und damit radial außerhalb der montierten Druckausgleichsmembran 4 die Ecken eines Rechtecks begrenzende, pfostenartige Erhebungen 8. Diese dienen zum Tragen eines in Fig. 3 gezeigten, oberhalb der Druckausgleichsmembran 4 anordenbaren Schutzdeckels 9, welcher mit Hilfe von Rastarmen 10 mit den axialen Enden der pfostenartigen Erhebungen 8 verrastbar ist. Der Schutzdeckel 9 verhindert eine Beschädigung der Druckausgleichsmembran 4 im Kraftfahrzeug sowie bei der Montage des Gehäuses 2 im Kraftfahrzeug.

Wie insbesondere aus den Fig. 2 und 3 hervorgeht, ist mit Radialabstand zu der Druckausgleichsmembran 4 und radial außen an die pfostenartigen Erhebungen 8 angrenzend eine ebene Dichtfläche 11 vorgesehen, die aufgrund der ebenen Anordnung in Umfangsrichtung einen stetigen Verlauf aufweist. In dem gezeigten Ausführungsbeispiel liegt die Dichtfläche 11 in einer gedachten Ebene. Die Dichtfläche 11 wird von einer Stirnseite 12 einer Umfangswand 13 gebildet, die sich von einer zerklüfteten Oberflächenstruktur radial außerhalb der Umfangswand 13 absetzt.

Die seitlich des Auflagerings 5 angeordnete Dichtfläche 11 liegt in Hochrichtung betrachtet in einem Bereich unterhalb des Auflagerings 5 und damit unterhalb des Randbereichs der Druckausgleichsmembran 4, also relativ zu der Druckausgleichsmembran 4 in Richtung zum Gehäuseinneren versetzt. Somit bildet die Umfangswand 13 bzw. die Dichtfläche 11 kein Flüssigkeitsbecken, in dem Flüssigkeit über ein die Druckausgleichsmembran 4 übersteigendes Flüssigkeitsniveau ansteigen könnte.

Wie sich weiterhin aus den Fig. 2 und 3 ergibt, geht die Dichtfläche 11 an zwei um 180° zueinander versetzten Abschnitten 14, 15 über in sich von der Druckausgleichsmembran 4 weg erstreckende ebene Strukturflächen 16, 17, die mit der Dichtfläche 11 in einer gemeinsamen, gedachten Ebene liegen.

Zum Prüfen der Druckausgleichsmembran 4 bzw. der Verbindung aus Auflagering 5 und Druckausgleichsmembran 4 auf Dichtheit bzw. Funktionsfähigkeit, kann von außen auf die Dichtfläche 11 eine Prüfvorrichtung dicht aufgesetzt werden, mit Hilfe der die Druckausgleichsmembran 4 mit Druckluft beaufschlagbar ist.

Insbesondere aus Fig. 3 ist zu entnehmen, dass mit Radialabstand zu der Druckausgleichsmembran 4 als auch mit Abstand zu der Dichtfläche 11 an der Außenseite des Gehäuses 2 Verstärkungsrippen 18 bis 20 vorgesehen sind, wobei die Verstärkungsrippen 18 bis 20 keinen durchgehenden ebenen Verlauf aufweisen. Stattdessen verändert sich die Höhenerstreckung der Verstärkungsrippen 18 bis 20 mit zunehmender Längserstreckung. Dabei sind die Verstärkungsrippen 18, 19 keilförmig ausgeformt, wobei die Höhenerstreckung der Verstärkungsrippen 18, 19 von einem Randbereich bis hin zur Strukturfläche 16 abnimmt. Auch die durchgehende Verstärkungsrippe 20 weist hin zu einem mittleren, auf dem Höhenniveau der ebenen Strukturflächen 16, 17 liegenden Abschnitt 21 eine beidseitig abnehmende Höhenerstreckung auf. Aufgrund der abnehmenden Höhenerstreckung der Verstärkungsrippen 18 bis 20 wird gewährleistet, dass sich Flüssigkeit in einem Bereich 22 innerhalb der Verstärkungsrippen 18 bis 20 nicht auf das Höhenniveau der Druckausgleichsmembran 4 ansteigen kann, sondern nur bis zu dem Höhenniveau der Strukturflächen 16, 17 bzw. der Dichtfläche 11, wobei sowohl die Strukturflächen 16, 17 als auch die Dichtfläche 11 unterhalb des Höhenniveaus der Druckausgleichsmembran 4 liegt. Hierdurch kann die Atmungsfähigkeit der Druckausgleichsmembran 4 im Betrieb der Antriebsvorrichtung dauerhaft sichergestellt werden.

In Fig. 4 ist in einer Seitenansicht der Höhenverlauf der in Fig. 3 links eingezeichneten Verstärkungsrippe 18 gezeigt. Zu erkennen ist der keilförmige Verlauf der Verstärkungsrippe 18, deren Höhenerstreckung bis auf das Höhenniveau der Dichtfläche 11 abfällt.

In Fig. 5 ist schematisch in einer Seitenansicht der Höhenverlauf der durchgehenden Verstärkungsrippe 20 gezeigt. Zu erkennen ist, dass die Höhe der Verstärkungsrippe 20 ausgehend von deren Randseiten hin zu einem zentrischen Abschnitt 21, wobei das Höheniveau des Abschnittes 21 unterhalb des Randbereichs der Druckausgleichsmembran 4 liegt. Im konkreten Ausführungsbeispiel entspricht das Höhenniveau des Abschnittes 21 dem Höhenniveau der Dichtfläche 11.

## Patentansprüche

1. Gehäuse für eine Antriebsvorrichtung, insbesondere für einen Verstellantrieb und/oder einen Scheibenwischerantrieb in einem Kraftfahrzeug, umfassend eine, eine Gehäuseöffnung (7) verschließende, Druckausgleichsmembran (4),
wobei eine um die Druckausglelchsmembran (4) umlaufende Dichtfläche (11) mit einem In Umfangsrichtung stetigen Verlauf vorgesehen ist, wobei die Dichtfläche (11), entlang einer Längsmittelachse der Gehäuseöffnung (7) betrachtet, unterhalb eines äußeren Randbereichs der Druckausgleichsmembran (4) angeordnet ist, **dadurch gekennzeichnet, dass** die Dichtfläche (11) von einer Stirnseite (12) einer um die Druckausgleichsmembran (4) umlaufenden Umfangswand (13) gebildet ist, die zumindest abschnittsweise gegenüber der umliegenden Gehäuseoberflächengeometrie erhöht ausgebildet ist, wobei die Funktionsfähigkeit der Druckausgleichsmembran sowie die Dichtheit der Verbindung aus Druckausgleichsmembran und Gehäuse bzw. aus Träger und Gehäuse unmittelbar am Gehäuse überprüfbar ist, indem an die umlaufende Dichtfläche eine geeignete Prüfvorrichtung dichtend anlegbar ist

2. Gehäuse nach Anspruch 1,
**dadurch gekennzeichnet,**
**dass** die Dichtfläche (11) in einer, vorzugsweise senkrecht zur Längsmittelachse der Gehäuseöffnung (7) verlaufenden Dichtebene angeordnet ist.

3. Gehäuse nach einem der Ansprüche 1 oder 2,
**dadurch gekennzeichnet,**
**dass** die Radialerstreckung der als Dichtfläche (11) ausgebildeten Stirnfläche (12) zwischen 2 und 10 mm - vorzugsweise etwa 5 mm - beträgt.

4. Gehäuse nach einem der vorhergehenden Ansprüche,
**dadurch gekennzeichnet,**
**dass** die Druckausgleichsmembran (4) kreisförmig, oval, langge-streckt oder rechteckig konturiert und ballig ausgebildet Ist und Ist.

5. Gehäuse nach einem der vorhergehenden Ansprüchen, **dadurch**
**gekennzeichnet,**
**dass** die Dichtfläche (11) radial außerhalb und entlang einer Längsmittelachse der Gehäuseöffnung (7) betrachtet unterhalb eines oberhalb der Druckausgleichsmembran (4) angeordneten Schutzdeckels (9) angeordnet ist.

6. Gehäuse nach einem der vorhergehenden Ansprüchen,
**dadurch gekennzeichnet,**
**dass** das Gehäuse (2) mindestens eine außen liegende Verstärkungsrippe (18, 19, 20) aufweist.

7. Gehäuse nach Anspruch 6,
**dadurch gekennzeichnet,**
**dass** die Verstärkungsrippe (18, 19, 20) derart ausgeformt ist, dass ein Abfließen von zwischen der Druckausgleichsmembran (4) und der Verstärkungsrippe (18, 19, 20) befindlicher Flüssigkeit gewährleistet ist.

8. Gehäuse nach einem der Ansprüche 6 oder 7,
**dadurch gekennzeichnet,**
**dass** die Verstärkungsrippe (18, 19, 20) eine über ihre Längserstreckung variierende Höhenerstreckung und/oder einem Durchbruch aufweist.

9. Gehäuse nach einem der Ansprüche 6 bis 8,
**dadurch gekennzeichnet,**
**dass** die Verstärkungsrippe (18, 19, 20), zumindest abschnittsweise, eine Keilform aufweist.

10. Antriebsvorrichtung, insbesondere Verstellantrieb in einem Kraftfahrzeug, mit einem in einem Gehäuse (2) nach einem der vorhergehenden Ansprüche aufgenommenen Getriebe.

## Claims

1. Housing for a drive device, in particular for an adjusting drive and/or a windshield wiper drive in a motor vehicle, comprising a pressure compensating diaphragm (4) which closes off a housing opening (7),
wherein a sealing surface (11) which runs around the pressure compensating diaphragm (4) is provided with a profile which is continuous in the circumferential direction, wherein the sealing surface (11), viewed along a longitudinal central axis of the housing opening (7), is arranged below an outer edge region of the pressure compensating diaphragm (4), **characterized in that** the sealing surface (11) is formed by an end side (12) of a circumferential wall (13) which runs around the pressure compensating diaphragm (4) and which is formed so as to be elevated at least in sections relative to the surrounding housing surface geometry, wherein the functional capability of the pressure compensating diaphragm and also the leak tightness of the connection between pressure compensating diaphragm and housing, or between support and housing, can be tested directly on the housing by virtue of the fact that a suitable testing device can be placed in sealing contact against the encircling sealing surface.

2. Housing according to Claim 1,
**characterized**
**in that** the sealing surface (11) is arranged in a sealing plane which runs preferably perpendicular to the longitudinal central axis of the housing opening (7).

3. Housing according to either of Claims 1 or 2,
**characterized in that** the radial extent of the end surface (12) formed as a sealing surface (11) is between 2mm and 10mm - preferably approximately 5 mm.

4. Housing according to one of the preceding claims,
**characterized**
**in that** the pressure compensating diaphragm (4) is of circular, oval, elongate or rectangular contour and is formed so as to be convex.

5. Housing according to one of the preceding claims,
**characterized**
**in that** the sealing surface (11), as viewed radially outside and along a longitudinal central axis of the housing opening (7), is arranged below a protective cover (9) arranged above the pressure compensating diaphragm (4).

6. Housing according to one of the preceding claims,
**characterized**
**in that** the housing (2) has at least one reinforcement rib (18, 19, 20) situated at the outside.

7. Housing according to Claim 6,
**characterized**
**in that** the reinforcement rib (18, 19, 20) is shaped so as to ensure a run-off of liquid situated between the pressure compensating diaphragm (4) and the reinforcement rib (18, 19, 20).

8. Housing according to either of Claims 6 or 7,
**characterized**
**in that** the reinforcement rib (18, 19, 20) has a height extent which varies over its longitudinal extent, and/or an aperture.

9. Housing according to one of Caims 6 to 8,
**characterized**
**in that** the reinforcement rib (18, 19, 20) has a wedge shape at least in sections.

10. Drive device, in particular adjusting drive in a motor vehicle, having a gearing held in a housing (2) according to one of the preceding claims.

## Revendications

1. Logement pour un dispositif d'entraînement, en particulier pour un entraînement de réglage et/ou un entraînement d'essuie-glace dans un véhicule automobile, comprenant une membrane d'équilibrage de la pression (4) fermant une ouverture du logement (7),
une surface d'étanchéité (11) entourant la membrane d'équilibrage de la pression (4) étant pourvue d'une étendue constante dans la direction périphérique, la surface d'étanchéité (11), considérée le long d'un axe médian longitudinal de l'ouverture du logement (7), étant disposée sous une région de bord extérieure de la membrane d'équilibrage de la pression (4), **caractérisé en ce que** la surface d'étanchéité (11) est formée depuis un côté frontal (12) d'une paroi périphérique (13) entourant la membrane d'équilibrage de la pression (4) qui est réalisé de manière rehaussée au moins en partie par rapport à la géométrie périphérique de la surface du logement, la fonctionnalité de la membrane d'équilibrage de la pression ainsi que l'étanchéité de la connexion entre la membrane d'équilibrage de la pression et le logement ou entre le support et le logement pouvant être contrôlée directement au niveau du logement, en appliquant hermétiquement un dispositif de contrôle approprié sur la surface d'étanchéité périphérique.

2. Logement selon la revendication 1,
**caractérisé en ce que**
la surface d'étanchéité (11) est disposée dans un plan d'étanchéité s'étendant de préférence perpendiculairement par rapport à l'axe médian longitudinal de l'ouverture du logement (7).

3. Logement selon l'une quelconque des revendications 1 ou 2,
**caractérisé en ce que**
l'étendue radiale de la surface frontale (12) réalisée sous forme de surface d'étanchéité (11) est comprise entre 2 et 10 mm, de préférence vaut environ 5 mm.

4. Logement selon l'une quelconque des revendications précédentes,
**caractérisé en ce que**
la membrane d'équilibrage de la pression (4) est réalisée avec un contour circulaire, ovale, allongé ou rectangulaire, et est réalisée sous forme bombée.

5. Logement selon l'une quelconque des revendications précédentes,
**caractérisé en ce que**
la surface d'étanchéité (11), considérée radialement à l'extérieur et le long d'un axe médian longitudinal de l'ouverture du logement (7), est disposée en dessous d'un couvercle de protection (9) disposé au-dessus de la membrane d'équilibrage de la pression (4).

6. Logement selon l'une quelconque des revendications précédentes,
**caractérisé en ce que**
le logement (2) présente au moins une nervure de renforcement (18, 19, 20) située à l'extérieur.

7. Logement selon la revendication 6,
**caractérisé en ce que**
la nervure de renforcement (18, 19, 20) est façonnée de telle sorte qu'une évacuation de liquide se trouvant entre la membrane d'équilibrage de la pression (4) et la nervure de renforcement (18, 19, 20) soit assurée.

8. Logement selon l'une quelconque des revendications 6 ou 7,
**caractérisé en ce que**
la nervure de renforcement (18, 19, 20) présente une étendue en hauteur variant sur son étendue longitudinale et/ou un orifice.

9. Logement selon l'une quelconque des revendications 6 à 8,
**caractérisé en ce que**
la nervure de renforcement (18, 19, 20) présente au moins en partie une forme en coin.

10. Dispositif d'entraînement, en particulier entraînement de réglage dans un véhicule automobile, comprenant une transmission logée dans un logement (2) selon l'une quelconque des revendications précédentes.
